Europäisches Patentamt

European Patent Office

Office européen des brevets

(11) Publication number: **0 361 871 B1**

# EUROPEAN PATENT SPECIFICATION

(45) Date of publication of patent specification: **26.05.93**  (51) Int. Cl.⁵: **B60C 9/26**

(21) Application number: **89309798.0**

(22) Date of filing: **26.09.89**

(54) A radial tyre for motor cycle.

(30) Priority: **26.09.88 JP 243087/88**

(43) Date of publication of application:
**04.04.90 Bulletin 90/14**

(45) Publication of the grant of the patent:
**26.05.93 Bulletin 93/21**

(84) Designated Contracting States:
**DE FR IT**

(56) References cited:
**DE-A- 2 734 797**
**FR-A- 1 228 241**
**FR-A- 2 387 132**
**US-A- 4 854 362**

**PATENT ABSTRACTS OF JAPAN vol. 8, no. 174 (M-316)(1611) 10 August 1984, & JP-A-59 67108 (SUMITOMO GOMU KOGYO K.K) 16 April 1984,**

(73) Proprietor: **SUMITOMO RUBBER INDUSTRIES LIMITED**
**1-1 Tsutsuicho 1-chome Chuo-ku Kobe-shi Hyogo-ken(JP)**

(72) Inventor: **Nobuo, Miwa**
**San ai Haimu-105, Suode-cho 1220-3 Hamamatsu-shi, Shizuoka-ken(JP)**

(74) Representative: **Stewart, Charles Geoffrey SP TYRES UK LIMITED Tyre Technical Division**
**Fort Dunlop Birmingham B24 9OT (GB)**

EP 0 361 871 B1

**Description**

The present invention relates to a radial tyre for motor cycles.

In recent years, in company with the increase in highway networks and higher speed use of vehicles, radial tyres have been introduced for motor cycles. Such tyres have a tread region with a radius which is rather small in comparison with that of a tyre for passenger car and therefore, the shearing strain produced by tread deformation under load is larger and rubber separation at the belt edges is apt to occur.

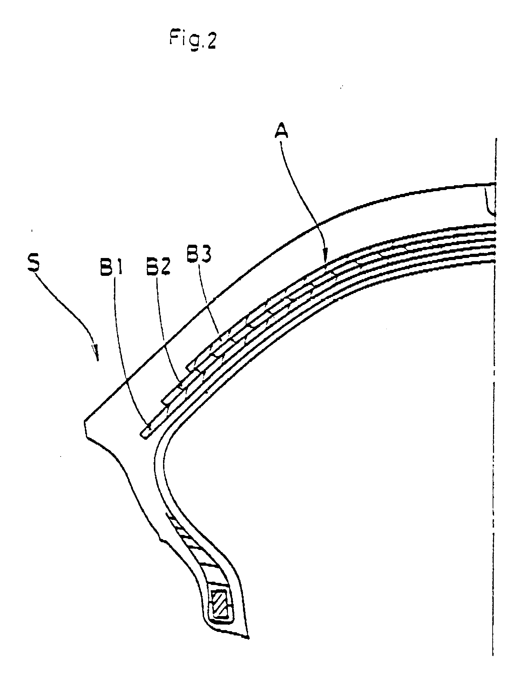

Accordingly, to prevent the rubber separation heretofore, the construction shown in Fig.2 has been used. This belt layer A is composed of a plurality of bell plies, generally three cut edge belt plies B1, B2, and B3, of different widths. superimposed one upon another in the order of the widest ply nearest to the carcass so as to avoid concentration of the rigidity differences at the edges of the belt layer A.

However, such a belt layer A becomes unsatisfactory in that the rigidity at the tread shoulder S is reduced so that steering stability particularly during cornering is prejudiced.

It is an object of the present invention to provide a radial tyre for a motor cycle In which ply separation is reduced without reducing the rigidity in the shoulder and thus to give good steering stability and durability.

According to the present invention a radial tyre for a motor cycle is provided having a belt layer comprising a first belt ply, a second belt ply and a third belt ply each having a respective base part superimposed one upon another from the carcass side to the radially outward side and each composed of belt cords arranged parallel to each other the first belt ply having two lateral folded skirts, one at each lateral edge of the base part, folded radially outwardly, such that each lateral edge of the base part of the second belt ply is between the first base part and the lateral skirts and each lateral edge of the third base part of the third belt ply is positioned on the radially outward side of the skirt so as to overlap the skirt, and the belt cords are laid at an angle of 25 degrees or less with respect to the equator of the tyre and crossed with each other between adjacent belt plies, characterised by the ratio BW/TW of the belt width which is the axial length of the widest base part along the base part measured along the base part to the tread width TW which is the axial length of the tread along the tread surface is 0.75 or more, the ratio FW/TW of the skirt width FW which is the axial length of the lateral skirt along the skirt to the tread width TW is 0.1 to 0.35, the ratio OW/FW of the overlapped width OW is the axial length of the overlapping part along the overlapped part to the skirt width FW is 0.7 or more.

Thus the belt layer according to the present invention covers both edges of the second belt ply by the skirts or folded parties of the first belt plies to restrain movement of the ply edges and stop looseness and ply separation.

The ratio BW/TW is set to be 0.75 or more, and the ratio FW/TW is set to be 0.1 to 0.35 with the result that the rigidity of the tread shoulders is increased. Also the ratio OW/FW being set to be 0.7 or more maintains camber thrust so that the steering stability and the cornering property are maximised.

The cords in each ply are laid at an angle of 25 degrees or less and crossed with each other to evenly increase the tread rigidity.

Thus the straight running stability at high speed and the wear resistance are improved.

An embodiment according to the present invention will now be described referring to the drawings, in which:

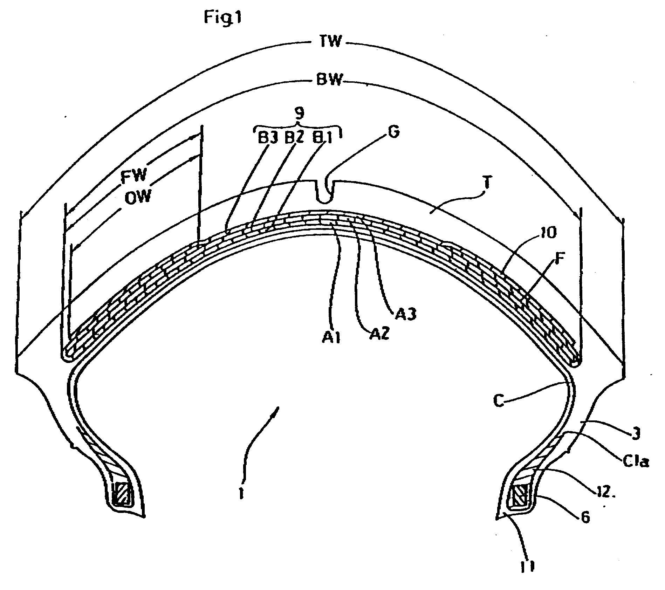

Fig.1. is a sectional view showing am embodiment of the invention.

Fig.2 is a partial sectional view showing a prior art tyre.

In the drawing, a tyre 1 has a tread T, sidewalls 3 extending radially inwardly from both ends of the tread T and bead regions 11 positioned at the radially inward ends of the sidewalls 3. A toroidal carcass C is wrapped at each edge around bead cores 6 in the bead regions 11 and a belt layer 9 is arranged radially outside the carcass C.

The tread T on the radially outward side of the carcass C extends virtually parallel to the carcass contour from the crown centre to both tread edges The tread has a straight width which is larger than the maximum sidewall width.

The carcass C is composed of a single carcass ply of cords laid at an angle ranging from 70 degrees to 90 degrees with respect to the circumferential direction of the tyre. Both edges Cla of the carcass C are folded or wrapped from the inside to the outside around the bead core 6 and terminated in the sidewall 3, so that the lateral rigidity is increased. If the carcass cord angle is less than 70 degrees the required high speed running properties characterised by a radial tyre are not achieved.

The carcass C may be composed of a plurality of carcass plies.

For the carcass cords organic fibre cords whose initial modulus is less than 1500 kgf/sq mm such as rayon, polyester or the likes may be employed. A particularly suitable material is nylon fibre cords of less than 500 kgf/sq mm.

The belt layer 9 has a three ply construction composed of a first belt ply B1, a second belt ply B2 and a third belt ply B3. The belt plies B1, B2, and B3 have main or base part A1, A2 and A3, each extending in the circumferential direction of the tyre parallel to the crown contour of the carcass C, and are superimposed one upon another from the carcass radially outwards.

The first belt ply B1 is a folded edge ply having lateral skirts or edges F folded radially outwardly at each lateral edge of the base part A1. The base part A1 has an axial width slightly larger than that of the other base parts A2 and A3. The axial width of the base part A1 provide a belt width BW defined and shown as the axial length of the widest base part.

The first belt ply B1 is also formed in such a way that the ratio BW/TW of the belt width BW to the tread width TW in the direction along the tread outer surface is 0.75 or more so as to increase the hoop of the tread T over approximately its whole width. Furthermore, the ratio FW/TW of the folded width FW which is the length of the skirt F to the tread width TW is set to be superimposed one upon from the carcass radially outwards.

The first belt ply B1 is a folded edge ply having lateral skirts or edges F folded radially outwardly at each lateral edge of the base part A1. The base part A1 has a axial width slightly larger than that of the other base parts A2 and A3. The axial width of the base part A1 provides a belt width BW defined and shown as the axial length of the widest base part.

The first belt ply B1 is also formed in such a way that the ratio BW/TW of the belt width BW to the tread width TW in the direction along the tread outer surface is 0.75 or more so as to increase the hoop of the tread T over approximately its whole width. Furthermore, the ratio FW/TW of the folded width FW which is the length of the skirt F to the tread width TW is set to be 0.1 to 0.35. If FW/TW is less than 0.1 the rigidity of the tread shoulders is insufficient and lowers performance during cornering. On the other hand, if it is over 0.35, the rigidity of the tread crown us unnecessarily increased and the material cost is also increased both of which are disadvantageous.

The second belt ply is composed of only a base part A2 having an axial width greater than the distance between the two free edges of the skirts F. Both the side edges of the base part A2 are positioned between the skirt F and the base part A1 so as to cover its cut edges and thus the adhesion to the surrounding rubber is improved.

The third belt ply B3 is again a cut edge ply composed of only a base part A3 the same as the second belt ply B2. The third belt ply B3 is on the radially outward side of the skirts F and has overlapped parts 10 over the skirt F at both lateral edges of the base part A3. The ratio OW/FW of the overlapped width OW in along the overlapped part 10 to the folded width FW is set to be 0.7 or more so that camber thrust is maintained when the tyre is tilted on the road surface.

Each belt ply B1, B2, B3 comprises belt cords which lie at an angle of 25 degrees or less with respect to the equator of the tyre and cross each other between adjacent plies so that the tread rigidity is made enough to provide high speed straight running stability and wear resistance.

For the belt cords, nylon fibre cords or the like, whose initial modulus of elasticity is 200 to 400 kgf/sq mm are preferably employed as such belt cords improve shock absorption and comfort during running.

However, for some service conditions organic fibre cords of high modulus, for example aromatic polyamide fibre cords, whose initial modulus of elasticity is about 3500 kgf/sq mm or more may be employed.

Furthermore, in the present embodiment, each bead region 11 is provided with a bead apex 12 composed of hard rubber material which is mounted on the bead core 6 and extends radially outward between the carcass C and its turned up portion Cl to provide lateral rigidity in the tyre.

A specific series of examples will now be compared.

Motor cycle tyres were made of size 150/60R18 with the structure shown in Table 1 and 2. The test tyres were mounted on the rear wheel of a motor cycle for a test to compare steering stability and wear resistance.

The steering stability was collectively evaluated with running stability, handling effect during full bank, high speed straight running and high speed cornering, grip performance during straight running and cornering by feel using a skilled test rider. The evaluated values for each performance characteristics are shown relative to the value for the prior art tyre being set as 100. Thus the higher the value, the better the tyre, wear resistance was evaluated by measuring remaining depth of the centre groove C 4000 km running on a straight road again shown as relative to the value of the prior art tyre set as 100 and the higher the value, the better the tyre.

## Table 1

| | carcass ply | first belt ply | second belt ply | third belt ply |
|---|---|---|---|---|
| ply cord | 2/1260 d/53ends * | 2/1260 d/53ends | 2/1260 d/53ends | 2/1260 d/53ends |
| cord material | nylon | nylon | nylon | nylon |
| cord angle | 90 ° | 16 ° | 16 ° | 16 ° |
| 100% modulus of Topping Rubber | 20kgf/cm | 20kgf/cm | 20kgf/cm | 20kgf/cm |

* ends/5cm

EP 0 361 871 B1

Table 2

| belt construction | embodiment No.1 | embodiment No.2 | comparative example NO.1 | comparative example NO.2 | comparative example NO.3 | prior art tyre |
|---|---|---|---|---|---|---|
| | Fig.1 | Fig.1 | Fig.1 | Fig.1 | Fig.1 | Fig.2 |
| ratio BW/TW | 0.85 (165/195) | 0.85 (165/195) | 0.85 (165/195) | 0.85 (165/195) | 0.85 (165/195) | 0.85 (165/195) |
| ratio FW/TW | 0.3 (58/195) | 0.1 (20/195) | 0.4 (78/195) | 0.08 (16/195) | 0.3 (58/195) | — (0/195) |
| ratio OW/FW | 0.90 (52/58) | 0.70 (14/20) | 0.65 (50/78) | 0.65 (6.5/10) | 0.90 (52/58) | — |
| cord angle<br>· first belt ply<br>· second belt ply<br>· third belt ply | 16°<br>16°<br>16° | 16°<br>16°<br>16° | 16°<br>16°<br>16° | 16°<br>16°<br>16° | 30°<br>30°<br>30° | 16°<br>16°<br>30° |
| steering stability | 120 | 115 | 100 | 105 | 105 | 100 |
| wear resistance | 105 | 105 | — | — | 90 | 100 |
| belt separation | NO | NO | — | *1 | — | *2 |

*1 separate at 3mm width
*2 separate at 5mm width

As apparent from table 2, embodiments No 1 and No 2 had no belt separation and were improved in steering stability and wear resistance compared to the comparative examples No 1 to No. 3 and the prior art tyre 1.

**Claims**

1. A radial tyre for a motor cycle having a belt layer (9) comprising a first belt ply (B1), a second belt ply (B2) and a third belt ply (B3) each having a respective base part (A1, A2 and A3) superimposed one upon another from the carcass side to the radially outward side and each composed of belt cords arranged parallel to each other the first belt ply B1 having two lateral folded skirts F, one at each lateral edge of the base part A1, folded radially outwardly such that each lateral edge of the base part A2 of the second belt ply B2 is between the base part A1 and the lateral skirts F and each lateral edge of the base part A3 of the third belt ply B3 is positioned on the radially outward side of the skirt F so as to overlap the skirt F, and the belt cords are laid at an angle of 25 degrees or less with respect to the equator of the tyre and crossed with each other between adjacent belt plies, characterised by the ratio BW/TW of the belt width BW, which is the axial length of the widest base part among the base parts A1, A2 and A3, measured along the base part to the tread width TW, which is the axial length of the tread T along the tread surface is 0.75 or more, the ratio FW/TW of the skirt width FW, which is the axial length of the lateral skirt F along the skirt F to the tread width TW is 0.1 to 0.35, the ratio OW/FW of the overlapped width OW, which is the axial length of the overlapping part along the overlapped part to the skirt width FW is 0.7 or more.

2. A radial tyre according to claim 1 characterised by the carcass cords being organic fibre cords having an initial modulus less than 1500 kgf/sq mm.

3. A tyre according to claim 1 characterised in that the carcass cords are organic fibre cords having an initial modulus less than 500 kgf/sq mm.

4. A tyre according to any one of claims 1 to 3 characterised in that the belt cords comprise nylon fibre cords or the like having an initial modulus of elasticity of 200 to 400 kgf/sq mm.

5. A tyre according to any one of claims 1 to 3 characterised in that the belt cords comprise organic fibre cords of high modulus whose initial modulus of elasticity is 3500 kgf/sq mm or more.

**Patentansprüche**

1. Radialreifen für ein Motorrad, mit einer Gürtelschicht (9), die umfaßt eine erste Gürtellage (B1), eine zweite Gürtellage (B2) und eine dritte Gürtellage (B3), die jede einen jeweiligen Grundabschnitt (A1, A2 und A3) besitzen, welche Grundabschnitte von der Karkassseite zu der radial äußeren Seite aufeinander gelegt und jeweils aus parallel zueinander angeordneten Gürtelkorden zusammengesetzt sind, wobei die erste Gürtellage B1 zwei seitliche gefaltete Randbereiche F besitzt, jeweils einen an jeder Seitenkante des Grundteils A1, die radial nach außen so gefaltet sind, daß jede Seitenkante des Grundteils A2 der zweiten Gürtellage B2 sich zwischen dem Grundteil A1 und den Seitenrandbereichen F befindet und jede Seitenkante des Grundteils A3 der dritten Gürtellage B3 an der radial äußeren Seite des Randbereichs F den Randbereich F überdeckend angesetzt ist, und die Gürtelkorde mit einem Winkel von 25° oder weniger bezüglich des Reifenäquators gelegt sind und einander in den benachbarten Gürtellagen überkreuzen, dadurch gekennzeichnet, daß das Verhältnis BW/TW der Gürtelbreite BW, die die längs dem Grundteil gemessene Axiallänge des breitesten Grundteils unter den Grundteilen A1, A2 und A3 ist, zu der Laufstreifenbreite TW, die die Axiallänge des Laufstreifens längs der Laufstreifenfläche ist, 0,75 oder mehr beträgt, das Verhältnis FW/TW der Randbereichbreite FW, welches die längs dem Randbereich F gemessene axiale Länge des seitlichen Randbereichs F ist, zu der Laufstreifenbreite TW 0,1 bis 0,35 ist, das Verhältnis OW/FW der überdeckten Breite OW, d.h. der längs des überdeckten Teils gemessenen axialen Länge des überdeckenden Teiles zu der Randbereichbreite FW 0,7 oder mehr beträgt.

2. Radialreifen nach Anspruch 1, dadurch gekennzeichnet, daß die Karkasskorde Korde aus organischen Fasern mit einem Initialmodul unter 1500 kp/mm² sind.

3. Reifen nach Anspruch 1, dadurch gekennzeichnet, daß die Karkasskorde Korde aus organischen Fasern mit einem Initialmodul kleiner als 500 kp/mm² sind.

4.  Reifen nach einem der Ansprüche 1 bis 3, dadurch gekennzeichnet, daß die Gürtelkorde Nylonfaser – korde oder dergleichen umfassen mit einem Initial – Elastizitätsmodul von 200 bis 400 kp/mm$^2$.

5.  Reifen nach einem der Ansprüche 1 bis 3, dadurch gekennzeichnet, daß die Gürtelkorde Korde aus organischen Fasern mit einem hohen Modul umfassen, deren Initial – Elastizitätsmodul 3500 kp/mm$^2$ oder mehr beträgt.

**Revendications**

1.  Pneumatique à carcasse radiale destiné à une motocyclette, ayant une couche (9) de ceinture qui comporte une première nappe (B1), une seconde nappe (B2) et une troisième nappe (B3) de ceinture ayant chacune une partie respective de base (A1, A2 et A3), superposées les unes aux autres depuis le côté de la carcasse vers le côté radialement externe et composées chacune de câblés de ceinture disposés parallèlement les uns aux autres, la première nappe B1 de ceinture ayant deux jupes latérales F, une à chaque bord latéral de la partie de base A1, repliées radialement à l'extérieur afin que chaque bord latéral de la partie de base A2 de la seconde nappe B2 de ceinture se trouve entre la partie de base A1 et les jupes latérales F et que chaque bord latéral de la partie de base A3 de la troisième nappe B3 de ceinture se trouve du côté radialement externe de la jupe F et recouvre la jupe F, et les câblés de ceinture sont disposés avec un angle de 25° ou moins par rapport à l'équateur du pneumatique et se recoupent entre les nappes adjacentes de ceinture, caractérisé en ce que le rapport BW/TW de la largeur BW de la ceinture, qui est la longueur axiale de la partie de base la plus large parmi les parties de base A1, A2 et A3, mesurée le long de la partie de base, à la largeur TW de la bande de roulement, qui est la longueur axiale de la bande de roulement T le long de la surface de la bande de roulement, est supérieur ou égal à 0,75, le rapport FW/TW de la largeur FW des jupes, qui est la longueur axiale de la jupe latérale F le long de la jupe F, à la largeur TW de la bande de roulement est compris entre 0,1 et 0,35, et le rapport OW/FW de la largeur OW de recouvrement, qui est la longueur axiale de la partie de recouvrement le long de la partie de recouvrement, à la largeur FW de la jupe est supérieur ou égal à 0,7.

2.  Pneumatique à carcasse radiale selon la revendication 1, caractérisé en ce que les câblés de carcasse sont des câblés de fibres organiques ayant un module initial inférieur à $1,5.10^{10}$ Pa (1 500 kg/mm$^2$).

3.  Pneumatique selon la revendication 1, caractérisé en ce que les câblés de carcasse sont des câblés de fibres organiques ayant un module initial inférieur à $5.10^9$ Pa (500 kg/mm$^2$).

4.  Pneumatique selon l'une quelconque des revendications 1 à 3, caractérisé en ce que les câblés de ceinture sont des câblés de fibres de "Nylon" ou analogues ayant un module d'élasticité initial compris entre $2.10^9$ et $4.10^9$ Pa (200 à 400 kg/mm$^2$).

5.  Pneumatique selon l'une quelconque des revendications 1 à 3, caractérisé en ce que les câblés de ceinture sont des câblés de fibres organiques de module élevé, dont le module d'élasticité initiale est supérieur ou égal à $3,5.10^{10}$ Pa (3 500 kg/mm$^2$).

Fig.1

Fig.2